# EUROPEAN PATENT APPLICATION

(11) **EP 1 897 674 A1**
(43) Date of publication of application: **12.03.2008**
(21) Application number: 07017259.8
(22) Date of filing: 04.09.2007
(51) Int. Cl.: B29C 47/40

(54) **Extruder with twin converging screws for extruding plastomers, elastomers and viscous liquids in general**

(30) Priority: 06.09.2006 IT MI20061694
(71) Applicant: POMINI Rubber & Plastics S.r.l., Castellanza (VA) (IT)
(72) Inventor: Regalia, Roberto, Castellanza (VA) (IT)
(74) Representative: Raimondi, Margherita

(57) **Abstract**

The invention relates to an extruder (10) with two screws, a first screw (11) and a second screw (12) each comprising a threaded conical shaft (13) having a first end (13a) with a bigger diameter and a second tapered end (13b), said screws being arranged converging towards each other for the extrusion of plastomers, elastomers and viscous liquids in general. According to the invention, said first screw (11) has a corresponding thread (21,31) with a first portion (21',31') which is diametrically larger than a corresponding first portion (22', 32') of the thread (22,32) of the second screw (12).

## Description

The present invention relates to an extruder with twin converging screws for extruding plastomers, elastomers and viscous liquids in general.

In the technical sector relating to the processing of viscous liquids in general and mixtures of elastomers or plastomers in particular, for some time extruders with two counter-rotating conical screws have been known, each screw consisting of a conical threaded rod and being arranged with their axes converging so as to reduce the available volume for the material when the latter is transported by the screws, so as to compact it in order to be able to extrude a continuous strip.

Although traditionally in a factory for elastomer-based mixtures, the processing which follows mixing with the "closed" internal mixer consists in the homogenization operation performed by means of an "open" cylinder mixer, during the last few years a type of twin screw extruder with counter-rotating conical screws has become well established, at least in the sector of mixtures for tyres.

For some years now, in particular in the case of production lines for masterbatches (i.e. without crosslinking agents), but latterly also in the case of "final" mixtures (with crosslinking agents), the open mixer has been gradually replaced by this counter-rotating conical twin screw extruder.

This technology offers various advantages:
- automatic line (absence of dedicated personnel)
- ease of use
- high productivity

Differently, in the sector for the production of mixtures and plastomers for engineering articles and in mixing lines which do not incorporate latest generation mixers (in particular with interpenetrating rotors), the cylinder mixer is still preferred, said mixer, compared to the counter-rotating conical twin-screw extruder, having a "mixing capacity".

The disadvantages of the counter-rotating conical twin-screw extruder in fact include:
- absence of dispersive mixing, said mixing being produced when there is a difference in speed between the working surfaces such as to produce sufficient speed values for deformation and shearing forces (the counter-rotating extruder, by its nature, has a zero or very small difference in speed between the screws);
- absence of distributive mixing which occurs when the flow is not mainly in one direction only;
- relative complexity, since the counter-rotating conical twin-screw extruder consists of two machines: the actual extruder and the calender situated opposite it, this being necessary since the counter-rotating extruder on its own does not generate sufficient pressure to be able to obtain a continuous strip.

In present-day production the extruders for rubber mixtures or similar materials are substantially grouped together in the following categories:
a) extruders with two interpenetrating counter-rotating symmetrical conical screws, as in the case of European patent EP 0,775,568;
b) extruders with interpenetrating co-rotating symmetrical conical screws, as in United States patent US 4,360,061;
c) extruders with two or more interpenetrating and tangential co-rotating asymmetrical cylindrical screws, as in United States patent US 5,499,870;
d) extruders with two interpenetrating co-rotating symmetrical cylindrical screws, as in United States patent US 4,875,847;
e) conical or cylindrical single-screw extruders, as in United States patent US 4,184,772.

Each of the abovementioned types of extruders has, during processing of the mixture, one or more limitations or drawbacks from among those mentioned.

The general object of the present invention is therefore to overcome the drawbacks of the prior art mentioned, providing an extruder with two co-rotating converging asymmetrical conical screws for the extrusion of plastomers, elastomers and viscous liquids in general to be placed below the closed mixer in such a way that:
- the capacity of the counter-rotating conical twin-screw extruder is improved;
- it is possible to replace the open cylinder mixer, which is nowadays widely (and almost exclusively) used for mixtures obtained with a single pass and final mixtures.

According to another object of the invention a twin screw extruder for extruding plastomers, having a greater "mixing capacity", is provided.

In view of the abovementioned objects, according to the present invention, it was thought to provide an extruder with twin converging screws for extruding plastomers, elastomers and viscous liquids in general, having the characteristic features described in the accompanying claims.

The structural and functional features of the present invention and its advantages compared to the known art will emerge even more clearly and become evident from an examination of the following description, relating to the accompanying drawings which show an extruder with two co-rotating converging screws provided in accordance with the innovative principles of the invention.

In the drawings:

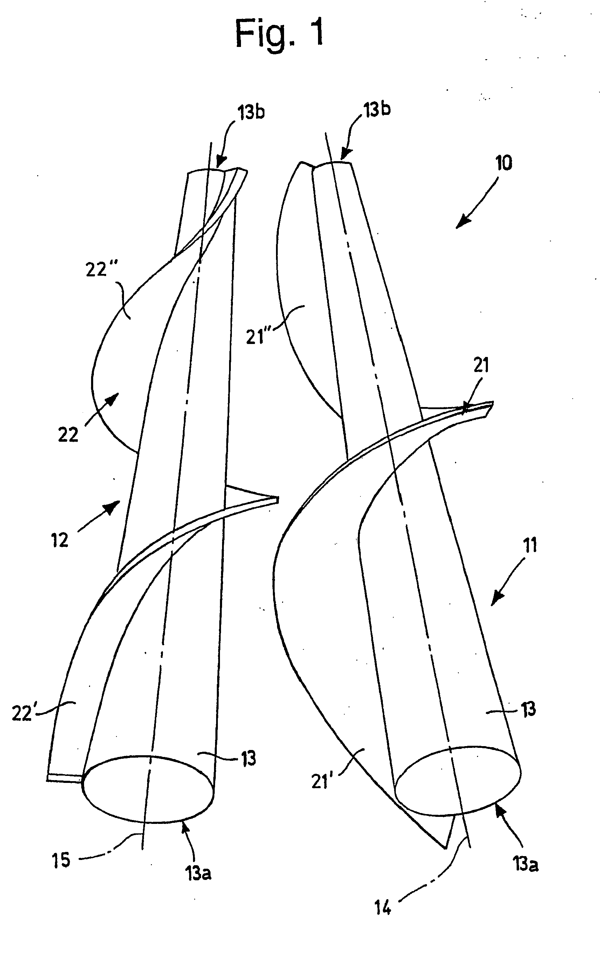

- Figure 1 is a perspective view (from the unloading side of the internal mixer) of an extruder with two converging screws according to the present invention;

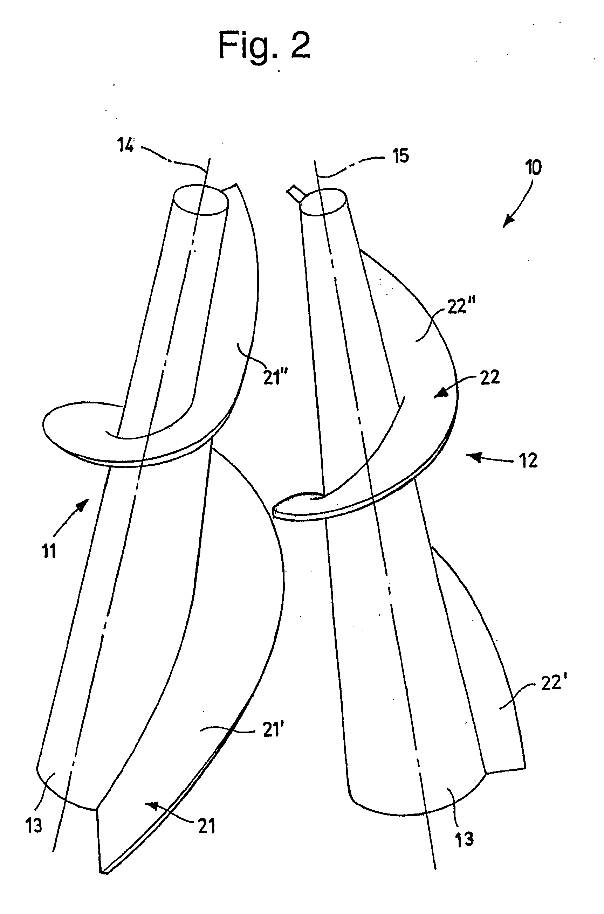

- Figure 2 is a perspective view (from the opposite side) of the extruder according to Figure 1;
- Figure 3 is a perspective view (from the unloading side of the internal mixer) of a different embodiment of the extruder with two converging screws according to the present invention;
- Figure 4 is a perspective view (from the opposite side) of the extruder according to Figure 3;
- Figure 5 is a perspective schematic view showing cross-sections through the extruder according to the constructional variant of Figures 3 and 4.

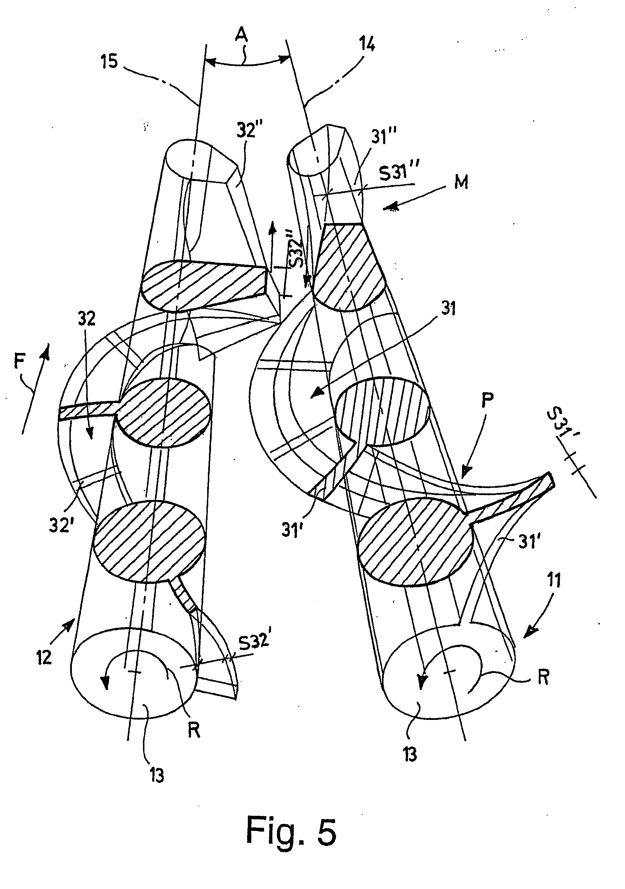

With reference to the figures, these show an extruder 10 with two converging screws 11 and 12 able to be housed inside a housing of a machine (not shown) for extruding plastomers, elastomers and viscous liquids in general in the direction of the arrow F in Figure 5.

The two converging screws, the first screw 11 and the second screw 12, each comprise a frustoconical shaft 13 having a first end 13a with a larger diameter and a second tapered end 13b towards which the material to be extruded is directed.

A helical thread is wound around the shaft and the two screws 11,12 are provided, mounted and motor-driven inside the housing, so as to rotate in the same direction shown in Figure 5 by the arrows R, i.e. co-rotating, about their longitudinal axes, 14 and 15 respectively.

The threads are formed partially asymmetrical, so as to ensure a transportation and mixing capacity owing to both the asymmetry of the screws and the opposite direction of the peripheral speed (as a result of co-rotation) in the zone between the said screws.

The two screws have a geometrical form which is different in each case and therefore a thread 21 of the first screw 11 and a thread 22 of the second screw 12 are defined.

With particular reference to Figure 5, the twin screw extruder 10 has a gripping and conveying zone P inside which the mixture is fed to the screws and which extends substantially from the first end 13a substantially as far as halfway along the length of each shaft 13, followed by a mixing zone M which extends as far as the second end 13b from where the extruded material emerges in order to be conveyed away for subsequent processing.

According to a first aspect of the invention, the screws 11 and 12 have a notable transportation capacity.

The screws are asymmetrical in the zone P for gripping the material (where the batch, i.e. the mixture charge, is received from the closed mixer).

In the abovementioned gripping and conveying zone P the first screw 11 has a first portion 21' of the thread 21 which is bigger than the corresponding first portion 22' of the thread 22 of the second screw 12, so that between the two screws the peripheral speed of the second screw 12 "pushes" (or more accurately "repels") the material upwards, i.e. in a disadvantageous direction, while the peripheral speed of the first screw 11 "pushes" instead the material downwards, i.e. in a direction which is advantageous for intake, towards the extrusion head situated in the vicinity of the ends 13b of the screws. The first screw 11, being provided with a thread which is diametrically larger, has the function of "capturing" and transporting a greater quantity of material than the screw 12.

In the mixing zone M the screws are symmetrical and have respective thread portions 21'' and 22'' substantially with the same diametral extension so as to be able to provide an additional mixing action owing to the different peripheral speed between outer diameter (of the thread) of one screw and inner diameter (of the core) of the other thread. The angle B of the thread, measured between the axis of rotation 14 or 15 and the straight line tangential to the thread, is relatively small, generally ranging between 0° and 45°, since the thread is wound practically parallel to the corresponding longitudinal axis 14,15 of the screw so as to ensure longer dwell times and relatively high elongational flow values, deformation speeds and shearing forces.

The angle B may be constant or variable along the length of the mixing section.

Along the mixing section it is possible to provide a double-thread screw in order to increase the mixing effect.

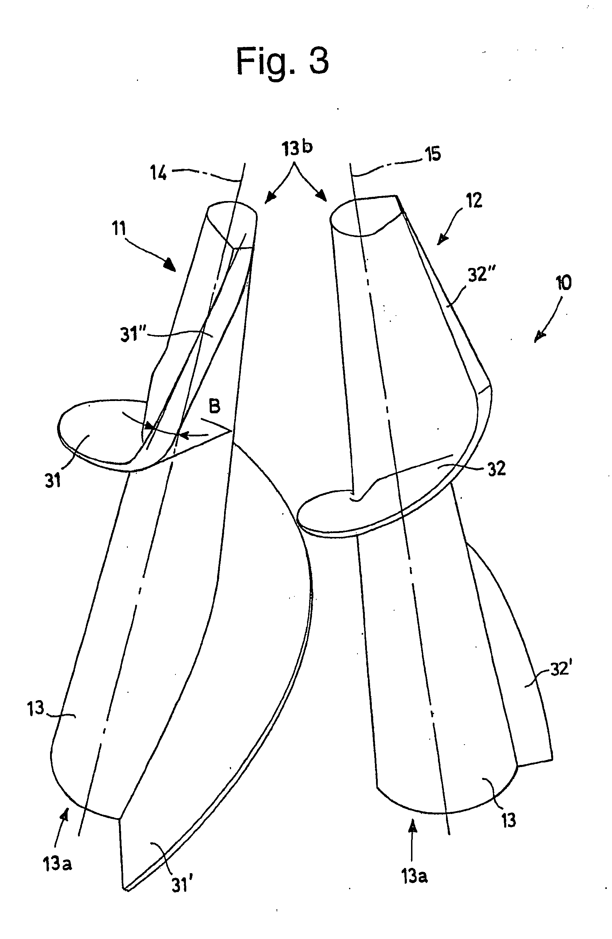

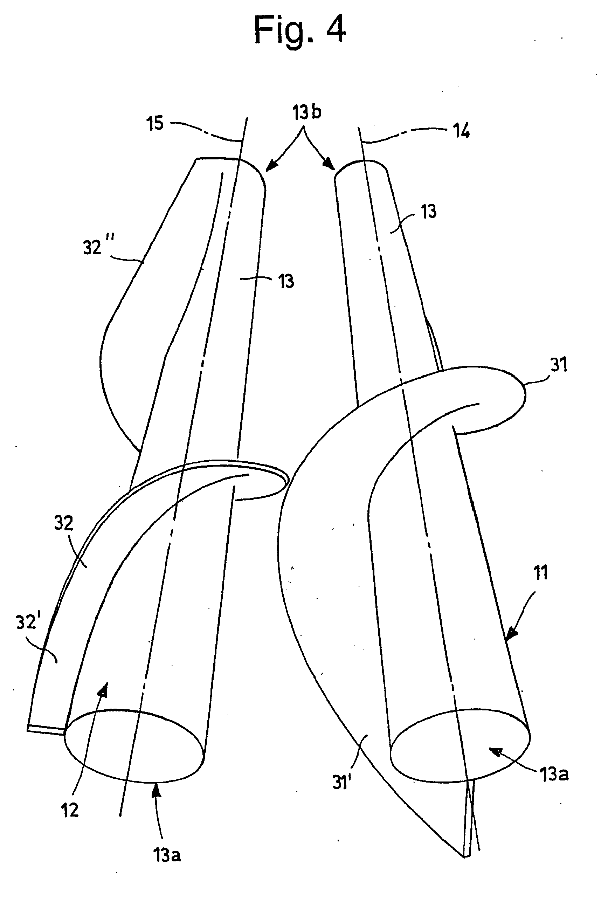

With reference in particular to Figures 3-5, these show a different embodiment of the invention in which the respective threads 31 and 32 of the screws 11,12 are formed with the first gripping and conveying portions P, 31' and 32' respectively, and the second mixing portions M, 31'' and 32'', so as to provide both a transportation and a mixing capacity.

The first portion 31' of the thread 31 of the first screw 11 is designed so as to be diametrically larger than the corresponding first portion 32' of the thread 32, while the second thread portions 31'' and 32'' are instead substantially symmetrical and have substantially the same diametral extension.

In the present embodiment, moreover, the thickness of the crest of the threads 31,32 along the second thread portions, 31" and 32' ' respectively, in the mixing zone M is greater than the thickness of the first thread portions, 31' and 32' respectively, in the gripping zone P. In general, the thickness S31'' in the zone 31'' is between S31' and 20 x S31'. The same is applicable for the thickness S32''.

Moreover, the thicknesses S31'' and S32'' may be different from each other so as to counterbalance the varying force supplied to the thrust in the direction F by the asymmetry of the two screws.

The angle A between the longitudinal axes 14 and 15 of the two screws is such as to ensure an ample "aperture" in the thrust zone and a sufficient compression in the mixing zone.

Preferably, this angle A is between 8° and 32°. The extruder according to the present invention has the following operational features:
- MIXING CAPACITY: therefore, there exists the possibility of eliminating from the plant the open cylinder mixer traditionally used for engineering articles (reduction in personnel, ease of use, automation, continuous cycle);
- MIXTURE GRIPPING CAPACITY: unlike the standard co-rotating twin-screw extruder, the fact of having asymmetrical screws ensures the necessary gripping performance;
- IMPROVED THERMAL CONTROL: the co-rotating twin-screw extruder, compared to the counter-rotating extruder, has a greater heat-exchange surface area, so that cooling of the mixture is better;
- POSSIBILITY OF ELIMINATING THE CALENDER: the co-rotating twin-screw extruder produces greater pressure and consequently it is possible to extrude a strip without the need for the calender at the extruder outlet.

With reference to the present description and the associated figures, it is clear how an extruder with twin converging screws for extruding plastomers, elastomers and viscous liquids in general according to the invention is particularly useful and advantageous. The object mentioned in the introduction to the description is thus achieved.

Obviously, the embodiments which the extruder according to the invention may assume may be different from that shown solely by way of a non-limiting example in the drawings.

The scope of protection of the invention is therefore defined by the accompanying claims.

## Claims

**1.** Extruder (10) with two screws, a first screw (11) and a second screw (12) each comprising a threaded conical shaft (13) having a first end (13a) with a bigger diameter and a second tapered end (13b), said screws being arranging converging towards each other for the extrusion of plastomers, elastomers and viscous liquids in general, **characterized in that** said first screw (11) has a corresponding thread (21,31) with a first portion (21',31') which is diametrically larger than a corresponding first portion (22',32') of the thread (22,32) of the second screw (12).

**2.** Extruder (10) with two screws (11,12) according to Claim 1, **characterized in that** said first and second screws (11,12) are arranged offset so as to be rendered co-rotating, i.e. be rotated in the same direction, about the respective longitudinal axes (14,15) with the threads interpenetrating.

**3.** Extruder (10) with two screws (11,12) according to Claim 2, **characterized in that** said extruder has a gripping and conveying zone (P) in which the mixture is fed to the screws (11,12) and which extends substantially from the first end (13a) substantially as far as halfway along the length of each shaft (13) followed by a mixing zone (M) which extends as far as the second end (13b) of the shaft (13) from where the extruded material emerges in order to be conveyed away for subsequent processing.

**4.** Extruder (10) with two screws (11,12) according to Claim 3, **characterized in that** the respective threads (21, 31, 22, 32) of the said screws (11,12) are formed with a first gripping and conveying portion (P), (21', 22', 31', 32') respectively, and a second mixing portion (M) (21'', 22'', 31'', 32'') respectively.

**5.** Extruder (10) with two screws (11,12) according to Claim 4, **characterized in that** the thickness of the crest of the threads (31,32) in the respective second portions (31'', 32'') is greater than the thickness in the respective first portions (31', 32').

**6.** Extruder (10) with two screws (11,12) according to Claim 5, **characterized in that** the respective second thread portions (21'',22'',31'',32'') have a winding angle B of the thread measured between the axis of rotation (14) or (15) and the straight line tangential to the thread, ranging between 0° and 45°.

**7.** Extruder (10) with two screws (11,12) according to Claim 6, **characterized in that** the angle (B) may be constant or varied along the length of the mixing section.

**8.** Extruder (10) with two screws (11,12) according to Claim 7, **characterized in that** the thicknesses (S31'', S32'') in the second portions (31'') and (32'') range respectively between the value of (S31') and 20 times the value of (S31') and between the value of (S32') and 20 times the value of (S32').

**9.** Extruder (10) with two screws (11,12) according to Claim 8, **characterized in that** the thicknesses (S31'') and (S32 ") are different from each other so as to counterbalance the varying force supplied to the thrust in the direction (F) by the asymmetry of the two screws.

**10.** Extruder (10) with two screws (11,12) according to Claims 3 to 9, **characterized in that** along the mixing section (M) each screw is provided with a double thread.

**11.** Extruder (10) with two screws (11,12) according to any one of the preceding claims, **characterized in that** the angle (A) between the longitudinal axes (14,15) of the two screws ranges between 8° and 32°.
